# EUROPEAN PATENT APPLICATION

(11) **EP 2 608 600 A2**
(43) Date of publication of application: **26.06.2013**
(21) Application number: 12187654.4
(22) Date of filing: 08.10.2012
(51) Int. Cl.: H04W 36/00, H04W 76/04

(54) **Handover method and system of dual-mode communication terminal**

(30) Priority: 19.12.2011 CN 201110427247
(71) Applicant: Huawei Device Co., Ltd., Longgang District Shenzhen Guangdong 518129 (CN)
(72) Inventor: Zhang, Kaibing, 518129 Shenzhen (CN); Zhu, Guangze, 518129 Shenzhen (CN); Sun, Zehui, 518129 Shenzhen (CN)
(74) Representative: Epping - Hermann - Fischer

(57) **Abstract**

Embodiments of the present invention disclose a handover method and system of a dual-mode communication terminal, so as to implement that during a handover, an IP address is not released, a session continues and a user is unaware. A first mode and a second mode of the dual-mode communication terminal adopt a master-slave universal serial bus USB driver structure. The methods includes: A host triggers initiating of network access to a second network by the dual-mode communication terminal; the host maintains occupation of an IP address which is in a first network by the dual-mode communication terminal, and obtains an Internet protocol IP address which is of the dual-mode communication terminal and in the second network; if the IP address in the second network is the same as a current IP address which is of the dual-mode communication terminal and in the first network, the host uses, in the second network, the IP address.

## Description

### FIELD OF THE INVENTION

The present invention relates to the field of communication technologies, and in particular, to a handover method and system of a dual-mode communication terminal.

### BACKGROUND OF THE INVENTION

With the gradual maturity and commercialization of various wireless technologies, a high rate brought by a high-bandwidth wireless technology has been favored by more and more operators. Many operators originally having single wireless networking have been trying to synchronously deploy a scenario in which multi-mode networks coexist. Multi-mode coexistence becomes a trend, such as coexistence between a WiMAX (Worldwide Interoperability for Microwave Access, worldwide interoperability for microwave access) network and a 3G network, between an LTE (Long Term Evolution, long term evolution) network and a 3G (3rd-generation) network, and 3G networks with different standards. In this background, a dual-mode communication terminal emerges as the times require.

In an existing dual-mode handover technology, during a handover, network connection of a dual-mode communication terminal in a first mode is disconnected first, and then network connection in a second mode is established, so as to change an IP (Internet Protocol, Internet protocol) address. However in the process, user experience is affected.

### SUMMARY OF THE INVENTION

Embodiments of the present invention disclose a handover method and system of a dual-mode communication terminal, so as to implement that when the dual-mode terminal is handed over between networks of different modes, an IP is unchanged, and a session (Session) continues.

An embodiment of the present invention discloses a handover method of a dual-mode communication terminal, where a first mode and a second mode of the dual-mode communication terminal adopt a master-slave universal serial bus USB driver structure, and the method includes:
triggering, by a host, initiating of network access to a second network by the dual-mode communication terminal;
maintaining, by the host, occupation of an IP address which is in a first network by the dual-mode communication terminal, and obtaining an Internet protocol IP address which is of the dual-mode communication terminal and in the second network; and
if the IP address in the second network is the same as a current IP address which is of the dual-mode communication terminal and in the first network, using, by the host and in the second network, the IP address, so that the dual-mode communication terminal continues to use, in the second network, the IP address to perform a session.

An embodiment of the present invention further discloses a handover system of a dual-mode communication terminal, where the system includes a software module running on a host and a software module running on the dual-mode communication terminal; the software module running on the dual-mode communication terminal is a universal serial bus USB driver of a first mode and a second mode of the dual-mode communication terminal, and a structure of the USB driver adopts a master-slave structure; the software module running on the host is pre-stored on the dual-mode communication terminal, and after the dual-mode communication terminal is connected to the host, the software module is installed on the host and runs. The software module running on the host includes a USB interface function module corresponding to the USB driver of the dual-mode communication terminal, and further includes a module configured to implement the following functions:
triggering initiating of network access to a second network by the dual-mode communication terminal;
maintaining occupation of an IP address which is in a first network by the dual-mode communication terminal, and obtaining an Internet protocol IP address which is of the dual-mode communication terminal and in the second network; and
if the IP address in the second network is the same as a current IP address which is of the dual-mode communication terminal and in the first network, using, in the second network, the IP address, so that the dual-mode communication terminal continues to use, in the second network, the IP address to perform a session.

By applying the handover method and system of the dual-mode communication terminal disclosed in the embodiments of the present invention, when the dual-mode communication terminal is handed over between two modes, an IP address is not released; after an IP is reobtained, compare whether a new IP is consistent with an old one, and if the new IP is consistent with the old one, continue to use an existing IP address. Therefore, in a dual-mode handover scenario, during a handover, an IP is not released, a session (Session) continues, user's unawareness of the handover is achieved and user experience is greatly improved.

### BRIEF DESCRIPTION OF THE DRAWINGS

FIG. 1 is a handover method of a dual-mode communication terminal according to an embodiment of the present invention;
FIG. 2 is a schematic diagram of signaling interaction of a handover method of a dual-mode communication terminal according to an embodiment of the present invention;
FIG. 3 is a schematic diagram of signaling interaction of another handover method of a dual-mode communication terminal according to an embodiment of the present invention;
FIG. 4 is a schematic diagram of signaling interaction of another handover method of a dual-mode communication terminal according to an embodiment of the present invention;
FIG. 5 is a schematic diagram of software module distribution of a handover system of a dual-mode communication terminal according to an embodiment of the present invention;
FIG. 6 is a schematic diagram of software module distribution of another handover system of a dual-mode communication terminal according to an embodiment of the present invention;
FIG. 7 is a schematic diagram of software module distribution of another handover system of a dual-mode communication terminal according to an embodiment of the present invention;
FIG. 8 is a schematic diagram of software module distribution of another handover system of a dual-mode communication terminal according to an embodiment of the present invention; and
FIG. 9 is a schematic diagram of software module distribution of another handover system of a dual-mode communication terminal according to an embodiment of the present invention;

### DETAILED DESCRIPTION OF THE EMBODIMENTS

To make the objective, technical solutions, and advantages of the present invention clearer, the following further describes specific embodiments of the present invention in detail with reference to the accompanying drawings.

On an existing dual-mode communication terminal with a USB (Universal Serial BUS, universal serial bus) interface, generally drivers with two modes are separately installed on a host side, and a USB HUB (hub) driver is adopted to associate two USB drivers with a unified USB interface. In embodiments of the present invention, a master-slave USB driver structure is preferably adopted. For convenience of illustration, dual modes here are called a first mode and a second mode. In an implementation manner of this architecture, on a dual-mode communication terminal, a USB driver of a first mode is installed on a platform of a second mode, and for a host side driver, only a virtual NDIS (Network Driver Interface Specification, network driver interface specification) card of the second mode needs to be installed. A control command of the first mode is encapsulated in a format of a command of the second mode and delivered to a chip of the first mode for corresponding processing. In the implementation manner, a compatibility problem of a conventional multi-mode USB is solved, a compatibility risk of a product is greatly reduced, and at the same time, the USB HUB is removed, so as to solve a power consumption problem of the USB HUB.

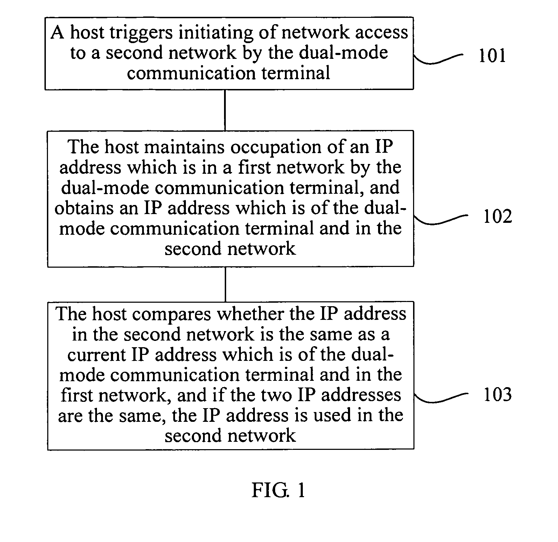

As shown in FIG. 1, a handover method of a dual-mode communication terminal provided by an embodiment of the present invention includes:
Step 101: A host triggers initiating of network access to a second network by the dual-mode communication terminal. In the embodiment of the present invention, the dual-mode communication terminal supports dual modes, is connected to a first network, and is capable of accessing the Internet normally. When the dual-mode communication terminal satisfies a condition of a handover from the first network to the second network, the host triggers the initiating of the network access to the second network by the dual-mode communication terminal.
Step 102: The host maintains occupation of an IP address which is in the first network by the dual-mode communication terminal, and obtains an IP address which is of the dual-mode communication terminal and in the second network.
Step 103: The host compares whether the IP address in the second network is the same as a current IP address which is of the dual-mode communication terminal and in the first network. If the two IP addresses are the same, the IP address is used in the second network.

By applying the handover method of a dual-mode communication terminal disclosed in the embodiment of the present invention, when the dual-mode communication terminal initiates the network access to the second network, the host does not release the IP address which is in the first network, and after obtaining the IP address which is in the second network, the host compares the obtained IP address and the IP address which is being used and in the first network. If the two IP addresses are the same, continue to use, in the second network, the IP address. In this way, the mobile terminal may be enabled to use, in the first network and the second network, a same IP address, so that before and after a handover, an IP address is not changed, and network disconnection is also not needed.

It should be noted that, in the foregoing embodiment, the first and the second in the first network and the second network are merely for purpose of differentiation and have no correspondence with the first and the second in the first mode and the second mode of a USB driver structure of the foregoing dual-mode communication terminal. The first network here may be a network supported by the first mode, and may also be a network supported by the second mode.

The embodiments of the present invention are further introduced through different specific examples below.

In the following embodiments, a host may be a personal computer, which includes an operating system, a DMCM (Double Modes Control Model, dual-mode control module) and a USB driver. The operating system is used to maintain network connection, and may be an operating system of Windows series, or MAC operating system, or other operating systems. Definitely, if a dual-mode communication terminal needs a specific background program to maintain the network connection, the background program should be installed in the operating system. The DMCM module is a software function module, may be a part of the background program and may also be a separate application. The USB driver is a USB driver of the foregoing second mode, and the driver is used by the host to perform data and command transmission with the dual-mode communication terminal through a USB interface. A control command of both the first mode and the second mode in the dual-mode communication terminal is transmitted by using the USB interface of the USB driver. The dual-mode communication terminal may be a mobile phone or a data card supporting a dual-mode data service, and so on. For convenience of illustration, in the following description, the dual-mode communication terminal includes a first Modem (modem) and a second Modem, which correspond to a network access function in a first network and a network access function in a second network respectively. A driver of the dual-mode communication terminal adopts the foregoing master-slave structure, but there is no correspondence between the first Modem and the first mode, or between the second Modem and the second mode.

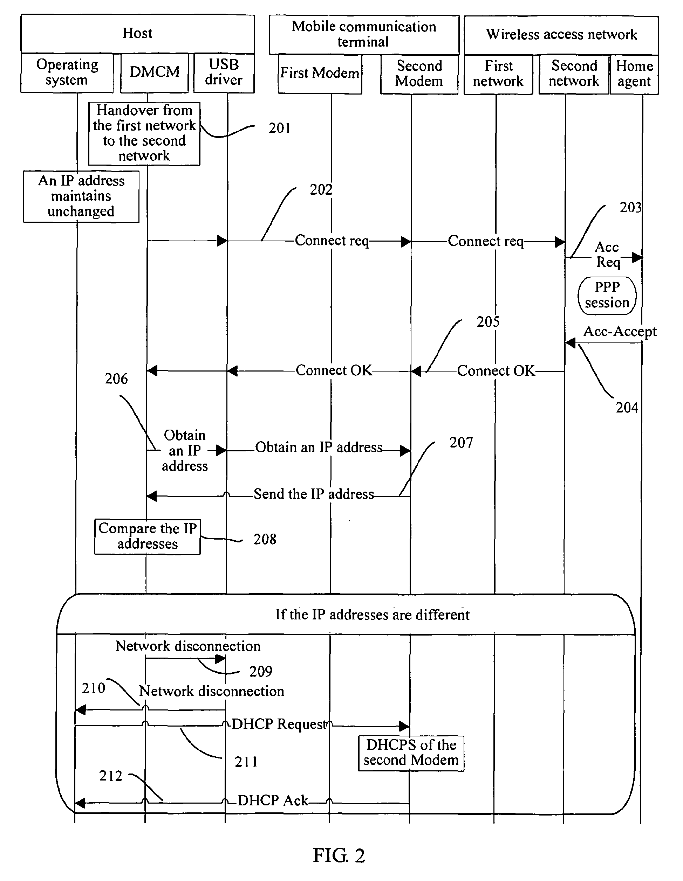

FIG. 2 shows another example of an embodiment of the present invention. In the example shown in FIG. 2, a first network to which a dual-mode communication terminal is connected may be a 3G network and may also be a 4G network. A second network that the dual-mode communication terminal accesses through a handover is a 3G network. A standard of the 3G is not limited. The 4G network may be, for example, a WiMAX (Worldwide Interoperability for Microwave Access, worldwide interoperability for microwave access) network or an LTE (Long Term Evolution, long term evolution) network. In the embodiment, the WiMAX network is taken as an example. The second Modem has a built-in DHCPS (Dynamic Host Configuration Protocol Server, dynamic host configuration protocol server) protocol stack. In the embodiment, a handover method of a dual-mode communication terminal is as follows:
Step 201: A DMCM module monitors that a condition on which the dual-mode communication terminal is handed over from the first network to the second network is satisfied, the handover is triggered, and the DMCM module instructs the operating system to maintain occupation of a current IP address which is in the first network.

The condition of the handover and how to judge that the condition is satisfied are specified by a protocol of each network. Only a related protocol is applied instead of being revised in the embodiment. If the related protocol is changed after the application of the present invention, as long as the changed related protocol does not reject the technical solutions disclosed by the embodiments of the present invention, thereby causing implementation to fail, the changed related protocol may be applied in the embodiments of the present invention.

The current IP address in the first network is an IP address which is being used, in the first network, by the dual-mode communication terminal. The maintaining the occupation of the current IP address which is in the first network is not releasing the IP address.
Step 202: The DMCM module sends a connect request (Connect Request) message to the second Modem which is in the dual-mode communication terminal via the USB driver. The second Modem forwards the connect request message to the second network. A format and content of the message adopt a format defined in an existing communication protocol. Similarly, if the protocol is revised in future, as long as the revised protocol does not impede the implementation of the embodiment of the present invention, a revised format may be used.
Step 203: The second network sends an Acc Request message to a home agent (HA, Home Agent) of the dual-mode communication terminal to start a PPP session. In a 3G network, the PPP session is a mature network access step of a terminal. Its specific manner is not described in detail here.
Step 204: The PPP session succeeds, and the HA sends an Acc Accept message to the second network.
Step 205: The second network sends a Connect OK message to the second Modem, and the second Modem sends the Connect OK message to the DMCM module.
Step 206: The DMCM module obtains an IP address which is in the second network from the second Modem.
Step 207: The second Modem sends, according to the prior art, the IP address which is in the second network and obtained in the PPP session to the DMCM module.
Step 208: The DMCM module compares the IP address in the second network and the current IP address in the first network, and if the two IP addresses are the same, the IP address is used to access a network. Because the operating system does not release the current IP address which is in the first network previously, actually in this case, no extra operation needs to be performed, and it is continued to use an original IP address.

By using the foregoing embodiments, when the dual-mode communication terminal is handed over to access another 3G network from a 3G or a 4G network, the DMCM module may instruct the operating system not to release the current IP address which is in the first network, while after the IP address in the second network is obtained, the two IP addresses are compared. If the two IP addresses are the same, the IP address is used in the second network.

If the two IP addresses are different, the embodiment may further include:
Steps 209 - 210: The DMCM module triggers displaying of network disconnection information by the USB driver, to notify the operating system of network disconnection.
Steps 211 - 212: The operating system initiates a DHCP procedure, and initiates a DHCP Request to a built-in DHCPS protocol stack of the second Modem, the second Modem sends the IP address which is in the second network and obtained by PPP dialing to the operating system through a DHCP Ack message, and the operating system uses the IP address which is in the second network to access the network. The DHCP process itself is an application of the existing communication protocol, which is not described in detail here.

It may be seen that, in the prior art, when the dual-mode communication terminal needs to be handed over from the first network to the second network, the IP address in the first network is released first, and then the IP address in the second network is obtained. In a handover process, there is bound to be a process of network disconnection and network reconnection. In the embodiment of the present invention, when the handover is initiated, the current IP address in the first network is not released. When the IP address in the second network is the same as the current IP address in the first network, network disconnection and network reconnection are not needed, so that user experience is effectively improved. Definitely, if IP addresses before and after the handover are different, a manner of disconnecting the network first and then using a new IP address for network connection may still be adopted to continue to complete the handover.

The following continues to introduce specific applications of the embodiments of the present invention in other scenarios in detail.

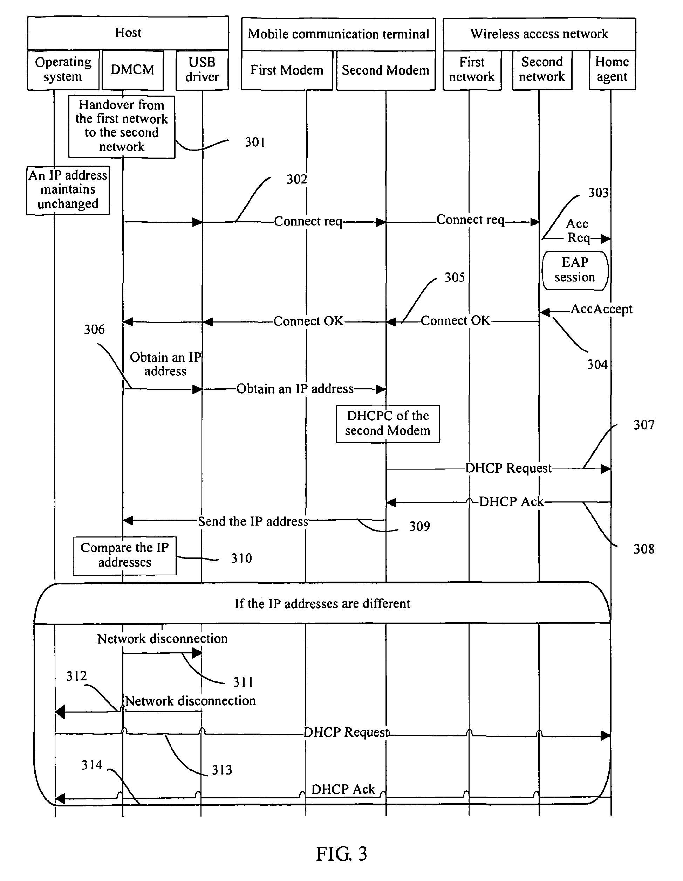

Referring to FIG. 3, FIG. 3 shows an application of an embodiment of the present invention in another scenario. In the embodiment, the dual-mode communication terminal has accessed a first network and needs to access a second network through a handover. Subjects shown in FIG. 3 are basically consistent with those shown in FIG. 2, except that the first Modem has a built-in DHCPC (DHCP Client, DHCP client) protocol stack. It should be noted that, in the embodiment, the first network to which the dual-mode communication terminal is connected may be a 3G network, and the second network that the dual-mode communication terminal accesses through the handover is a 4G network. A standard of the 3G is not limited. The 4G network may be, for example, a WiMAX (Worldwide Interoperability for Microwave Access, worldwide interoperability for microwave access) network or an LTE (Long Term Evolution, long term evolution) network. In the embodiment, the WiMAX network is taken as an example. A part of steps described in the embodiment are also similar to the steps in FIG. 2. For these steps, only brief description is given in the embodiment, and for details, reference may be made to related parts of the embodiment shown in FIG. 2.
Step 301: Similar to step 201, a DMCM module monitors that a condition on which the dual-mode communication terminal is handed over from the first network to the second network is satisfied, the handover is triggered, and the DMCM module instructs the operating system to maintain occupation of a current IP address which is in the first network.
Step 302: The DMCM module sends a connect request (Connect Request) message to a second Modem which is in the dual-mode communication terminal via the USB driver. The second Modem forwards the connect request message to the second network.
Step 303: The second network sends an Acc Request message to a home agent (HA, Home Agent) of the dual-mode communication terminal to start an EAP session. The EAP session is a mature network access step of a terminal in a WiMAX network. Its specific manner is not described in detail here.
Step 304: The EAP session succeeds, and the HA sends an Acc Accept message to the second network.
Step 305: The second network sends a Connect OK message to the second Modem, and the second Modem sends the Connect OK message to the DMCM module.
Step 306: The DMCM module instructs the first Modem to obtain an IP address which is in the second network.
Step 307: The built-in DHCPC protocol stack in the first Modem initiates, according to the prior art, a DHCP process, and sends a DHCP Request message to the HA of the dual-mode communication terminal.
Step 308: The HA returns a DHCP Ack message to the DHCPC protocol stack of the first Modem, and completes the DHCP process.
Step 309: The first Modem sends the IP address obtained in the DHCP process to the DMCM module.
Step 310: The DMCM module compares the IP address in the second network and the current IP address in the first network. If the two IP addresses are the same, the IP address is used to access a network. Because the operating system does not release the current IP address which is in the first network previously, actually in this case, no extra operation needs to be performed, and it is continued to use an original IP address.

By using the foregoing embodiment, when the dual-mode communication terminal is handed over to access the WiMAX network from a 3G network, the DMCM module may instruct the operating system not to release an current IP address of the 3G network, while after an IP address of the WiMAX network is obtained, the two IP addresses are compared. If the two IP addresses are the same, the IP address is used in the WiMAX network.

If the two IP addresses are different, the embodiment may further include:
Steps 311 - 312: The DMCM module triggers displaying of network disconnection information by the USB driver, to notify the operating system of network disconnection.
Steps 313 - 314: The operating system initiates a DHCP procedure, and initiates a DHCP Request to the HA, the HA sends the IP address which is in the second network to the operating system through a DHCP Ack message, and the operating system uses the IP address which is in the second network to access the network. The DHCP process itself is an application of an existing communication protocol, which is not described in detail here.

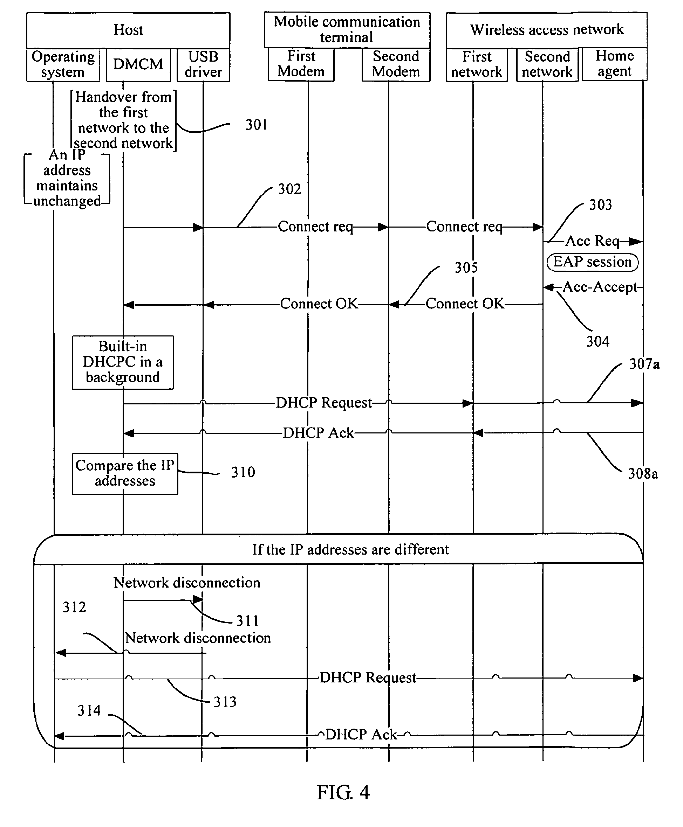

An optional replacing manner of the implementation manner shown in FIG. 3 is as shown in FIG. 4, which specifically is: step 306 to step 309 may be replaced with step 307a and step 308a: A DHCPC protocol stack is configured in a background of the dual-mode communication terminal. After step 305, the DHCPC protocol stack in the background sends the second network a DHCP Request message, which is forwarded to the HA by the second network, and the HA sends the IP address which is in the second network to the DHCPC protocol stack which is in the background through a DHCP Ack message.

It may be seen that, in the prior art, when the dual-mode communication terminal needs to be handed over from the first network to the second network, the IP address in the first network is released first, and then the IP address in the second network is obtained. In a handover process, there is bound to be a process of network disconnection and network reconnection. In the embodiment of the present invention, when the handover is initiated, the current IP address in the first network is not released. When the IP address in the second network is the same as the current IP address in the first network, network disconnection and network reconnection are not needed, so that user experience is effectively improved. Definitely, if IP addresses before and after the handover are different, a manner of disconnecting the network first and then using a new IP address for network connection may still be adopted to continue to complete the handover.

The foregoing embodiment shown in FIG. 2 is an embodiment of accessing a 3G network from a 3G or 4G network through a handover, while the embodiments shown in FIG. 3 and FIG. 4 are embodiments of accessing a 4G network from a 3G network through a handover. It may be understood that, an embodiment of a free handover between 3G and 4G networks may be obtained by adopting a manner of combining the embodiment shown in FIG. 2 and the embodiment shown in FIG. 3 or FIG. 4. It needs to be restated that, in the embodiments of the present invention, a dual-mode communication terminal with a master-slave structure driver needs to be adopted, but correspondence between the first mode as well as the second mode, and the first network as well as the second network are not limited.

Through description about the foregoing implementation manners, persons skilled in the art may clearly understand that the present invention may be implemented through software by combining a necessary general hardware platform, and definitely may also be implemented through hardware. In most cases, however, the former is a preferred implementation manner. Based on such understanding, the technical solutions of the present invention or the part that makes contributions to the prior art may be substantially embodied in a form of a software product. The computer software product is stored in a readable storage medium, for example, a floppy disk, a hard disk, or an optical disk of a computer, and includes several instructions used to enable a computer device (which may be a personal computer, a server, or a network device, and so on) to execute the methods described in the embodiments of the present invention.

The following embodiment discloses a handover system of a dual-mode communication terminal, where the system includes a software module running on a host and a software module running on the dual-mode communication terminal. The software module running on the dual-mode communication terminal is a universal serial bus USB driver of a first mode and a second mode of the dual-mode communication terminal, and a structure of USB driver adopts a master-slave structure. The software module running on the host is pre-stored on the dual-mode communication terminal. When the dual-mode communication terminal is connected to the host, the software module is installed on the host and runs, includes an interface function module corresponding to the USB driver of the dual-mode communication terminal, and further includes a module configured to implement the following functions: triggering initiating of network access to a second network by the dual-mode communication terminal; maintaining occupation of an IP address which is in the first network by the dual-mode communication terminal, and obtaining an Internet protocol IP address which is of the dual-mode communication terminal and in the second network; and if the IP address in the second network is the same as a current IP address which is of the dual-mode communication terminal and in the first network, using, in the second network, the IP address.

Specifically, the software module running on the host specifically includes a dual-mode management module DMCM. The triggering the initiating of the network access to the second network by the dual-mode communication terminal is specifically that the dual-mode management module monitors that a condition on which the dual-mode communication terminal is handed over from the first network to the second network is satisfied, and the handover is triggered. The maintaining the occupation of the IP address which is in the first network by the dual-mode communication terminal is specifically that the DMCM module instructs an operating system of the host to maintain the occupation of the current IP address which is in the first network.

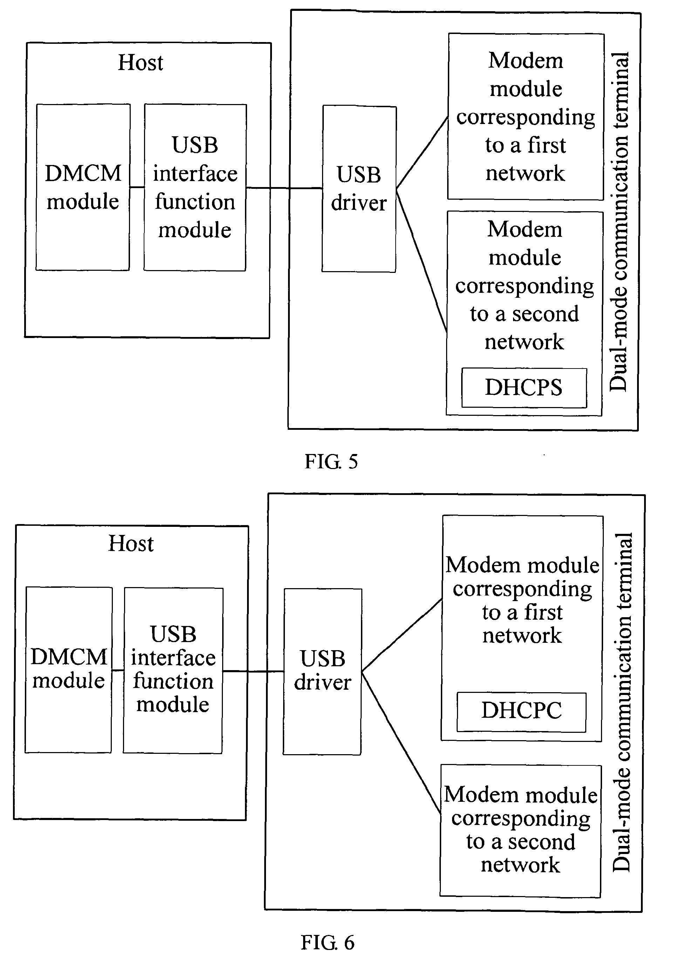

As shown in FIG. 5, if the second network is a 3G network, and the first network is a 3G or a WiMAX network, the software module running on the dual-mode communication terminal further includes a modem module which corresponds to the second network and is in the dual-mode communication terminal, and the modem module has a built-in dynamic host configuration protocol DHCP server protocol stack. The obtaining the IP address which is of the dual-mode communication terminal and in the second network specifically is:
The DMCM module obtains the IP address which is in the second network from the modem module which corresponds to the second network and is in the dual-mode communication terminal; the modem module corresponding to the second network sends the IP address which is in the second network and obtained in a PPP session to the DMCM module.

As shown in FIG. 6, if the second network is a WiMAX network and the first network is a 3G network, the software module running on the dual-mode communication terminal further includes a modem module which corresponds to the first network and is in the dual-mode communication terminal, and the modem module which corresponds to the first network and is in the dual-mode communication terminal has a built-in dynamic host configuration protocol DHCP client protocol stack. The obtaining the IP address which is of the dual-mode communication terminal and in the second network specifically is:
The DMCM module instructs the modem module corresponding to the first network to obtain the IP address which is in the second network; the built-in DHCP client protocol stack in the modem module corresponding to the first network obtains the IP address from a home agent of the dual-mode communication terminal through a DHCP process; the modem module corresponding to the first network sends the IP address to the DMCM module.

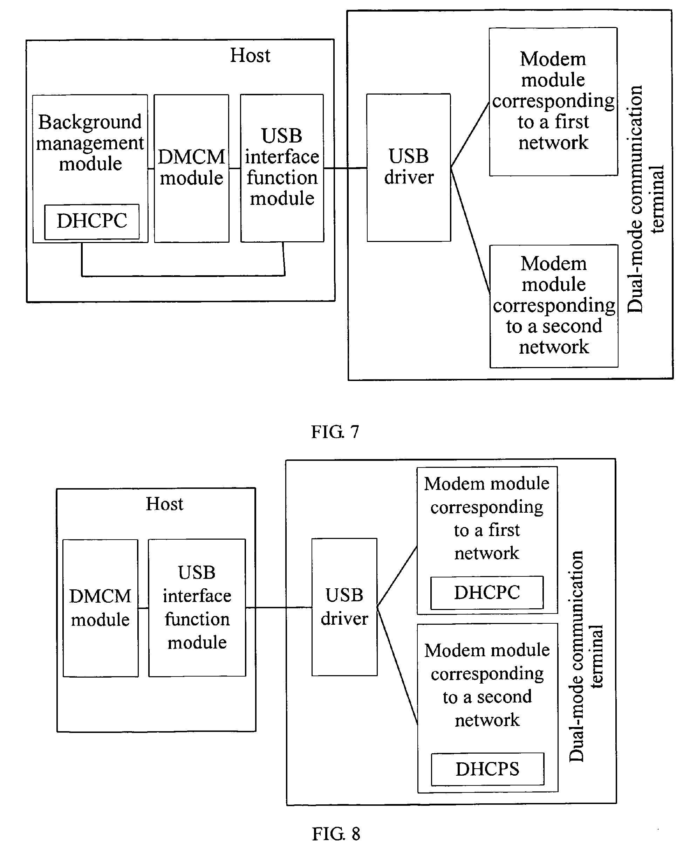

Or, as shown in FIG. 7, if the second network is a WiMAX network and the first network is a 3G network, the software module running on the host further includes a background management module of the dual-mode communication terminal, and the background management module of the dual-mode communication terminal is configured with a dynamic host configuration protocol DHCP client protocol stack. The obtaining the IP address which is of the dual-mode communication terminal and in the second network specifically is:
The DHCP client protocol stack configured in the background management module performs a DHCP process via the second network and a home agent which is of the dual-mode communication terminal and in the second network; the DHCP client protocol stack configured in the background management module obtains the IP address via a DHCP Ack message which is from the home agent.

Optionally, a master-slave USB driver structure is specifically that, a USB driver of the first mode on the dual-mode communication terminal is installed on a platform of the second mode, and a USB interface function module installed on the host is a virtual network card of the second mode; a control command of the first mode is encapsulated in a format of a command of the second mode and delivered to a chip of the first mode for corresponding processing.

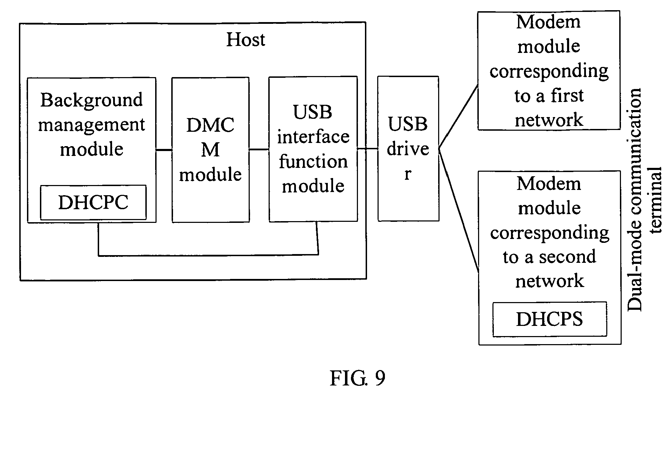

Optionally, the foregoing FIG. 5 may be combined with FIG. 6 or FIG. 7 separately, as shown in FIG. 8 or FIG. 9.

By applying the handover method and system of a dual-mode communication terminal disclosed in the embodiments of the present invention, when the dual-mode communication terminal is handed over between two modes, an IP address is not released; after an IP is reobtained, compare whether a new IP is consistent with an old one, and if the new IP is consistent with the old one, continue to use an existing IP address. Therefore, in a dual-mode handover scenario, during a handover, an IP is not released, a session (Session) continues, user's unawareness of the handover is achieved and user experience is greatly improved.

The foregoing embodiments are only intended to describe the technical solutions of the present invention, instead of limiting the present invention. Although the present invention is described in detail with reference to the foregoing embodiments, those of ordinary skill in the art should understand that they may still made modifications to the technical solutions recorded in the foregoing embodiments, or equivalent replacements to a part of the technical features; however, these modifications or replacements do not make the essence of the corresponding technical solutions depart from the scope of the technical solutions in the embodiments of the present invention.

## Claims

1. A handover method of a dual-mode communication terminal, wherein a first mode and a second mode of the dual-mode communication terminal adopt a master-slave universal serial bus USB driver structure, and the method comprises:
triggering, by a host, initiating of network access to a second network by the dual-mode communication terminal;
maintaining, by the host, occupation of an IP address which is in a first network by the dual-mode communication terminal, and obtaining an Internet protocol IP address which is of the dual-mode communication terminal and in the second network; and
if the IP address in the second network is the same as a current IP address which is of the dual-mode communication terminal and in the first network, using, by the host and in the second network, the IP address, so that the dual-mode communication terminal continues to use, in the second network, the IP address to perform a session.

2. The method according to claim 1, wherein the host comprises an operating system and a dual-mode management module DMCM,
the triggering, by the host, the initiating of the network access to the second network by the dual-mode communication terminal specifically is: monitoring, by the dual-mode management module, that a condition on which the dual-mode communication terminal is handed over from the first network to the second network is satisfied, and triggering a handover; and
the maintaining, by the host, the occupation of the IP address which is in the first network by the dual-mode communication terminal specifically is: instructing, by the DMCM module, the operating system to maintain the occupation of the current IP address which is in the first network.

3. The method according to claim 2, wherein the second network is a 3G network, the first network is a 3G or a WiMAX network, and a modem module which corresponds to the second network and is in the dual-mode communication terminal has a built-in dynamic host configuration protocol DHCP server protocol stack, and the obtaining the IP address which is of the dual-mode communication terminal and in the second network specifically is:
obtaining, by the DMCM module, the IP address which is in the second network from the modem module which corresponds to the second network and is in the dual-mode communication terminal; and
sending, by the modem module corresponding to the second network, the IP address which is obtained in a PPP session and in the second network to the DMCM module.

4. The method according to claim 3, further comprising:
if the IP address in the second network is different from the current IP address which is of the dual-mode communication terminal and in the first network, triggering, by the host, network disconnection, and initiating a DHCP process to a built-in dynamic host configuration protocol DHCP server protocol stack which is in the modem module which corresponds to the second network and is in the dual-mode communication terminal, so as to obtain the IP address which is in the second network and obtained, in the PPP session, by the modem module corresponding to the second network.

5. The method according to claim 2, wherein the second network is a WiMAX network, the first network is a 3G network, a modem module which corresponds to the first network and is in the dual-mode communication terminal has a built-in dynamic host configuration protocol DHCP client protocol stack, and the obtaining the IP address which is of the dual-mode communication terminal and in the second network specifically is:
instructing, by the DMCM module, the modem module corresponding to the first network to obtain the IP address which is in the second network;
obtaining, by the built-in DHCP client protocol stack in the modem module corresponding to the first network, the IP address from a home agent of the dual-mode communication terminal through a DHCP process; and
sending, by the modem module corresponding to the first network, the IP address to the DMCM module.

6. The method according to claim 2, wherein the second network is a WiMAX network, the first network is a 3G network, the host comprises a background management module of the dual-mode communication terminal, the background management module of the dual-mode communication terminal is configured with a dynamic host configuration protocol DHCP client protocol stack, and the obtaining the IP address which is of the dual-mode communication terminal and in the second network specifically is:
performing, by the DHCP client protocol stack configured in the background management module, a DHCP process via the second network and a home agent which is of the dual-mode communication terminal and in the second network; and
obtaining, by the DHCP client protocol stack configured in the background management module, the IP address through a DHCP Ack message which is from the home agent.

7. The method according to claim 5 or 6, further comprising:
if the IP address in the second network is different from the current IP address which is of the dual-mode communication terminal and in the first network, triggering, by the host, network disconnection, and requesting the IP address which is in the second network from the home agent which corresponds to the dual-mode communication terminal and is in the second network.

8. The method according to any one of claims 1 to 7, wherein the adopting the master-slave USB driver structure specifically is: installing a USB driver of the first mode in the dual-mode communication terminal on a platform of the second mode, and installing a virtual network card of the second mode in the host; and encapsulating a control command of the first mode in a format of a command of the second mode and delivering the encapsulated control command to a chip of the first mode for corresponding processing.

9. A handover system of a dual-mode communication terminal, comprising a software module running on a host and a software module running on the dual-mode communication terminal, wherein the software module running on the dual-mode communication terminal is a universal serial bus USB driver of a first mode and a second mode of the dual-mode communication terminal, and a structure of the USB driver adopts a master-slave structure; the software module running on the host is pre-stored on the dual-mode communication terminal, and after the dual-mode communication terminal is connected to the host, the software module is installed on the host and runs; the software module running on the host comprises a USB interface function module corresponding to the USB driver of the dual-mode communication terminal, and further comprises a module configured to implement the following functions:
triggering initiating of network access to a second network by the dual-mode communication terminal;
maintaining occupation of an IP address which is in a first network by the dual-mode communication terminal, and obtaining an Internet protocol IP address which is of the dual-mode communication terminal and in the second network; and
if the IP address in the second network is the same as a current IP address which is of the dual-mode communication terminal and in the first network, using, in the second network, the IP address, so that the dual-mode communication terminal continues to use, in the second network, the IP address to perform a session.

10. The system according to claim 9, wherein the software module running on the host specifically comprises a dual-mode management module DMCM,
the triggering the initiating of the network access to the second network by the dual-mode communication terminal specifically is: monitoring, by the dual-mode management module, that a condition on which the dual-mode communication terminal is handed over from the first network to the second network is satisfied, and triggering a handover; and
the maintaining the occupation of the IP address which is in the first network by the dual-mode communication terminal specifically is: instructing, by the DMCM module, an operating system of the host to maintain the occupation of the current IP address which is in the first network.

11. The system according to claim 10, wherein the second network is a 3G network, the first network is a 3G or a WiMAX network, the software module running on the dual-mode communication terminal further comprises a modem module which corresponds to the second network and is in the dual-mode communication terminal, the modem module has a built-in dynamic host configuration protocol DHCP server protocol stack, and the obtaining the IP address which is of the dual-mode communication terminal and in the second network specifically is:
obtaining, by the DMCM module, the IP address which is in the second network from the modem module which corresponds to the second network and is in the dual-mode communication terminal; and
sending, by the modem module corresponding to the second network, the IP address which is obtained in a PPP session and in the second network to the DMCM module.

12. The system according to claim 10, wherein the second network is a WiMAX network and the first network is a 3G network, the software module running on the dual-mode communication terminal further comprises a modem module which corresponds to the first network and is in the dual-mode communication terminal, the modem module which corresponds to the first network and is in the dual-mode communication terminal has a built-in dynamic host configuration protocol DHCP client protocol stack, and the obtaining the IP address which is of the dual-mode communication terminal and in the second network specifically is:
instructing, by the DMCM module, the modem module corresponding to the first network to obtain the IP address which is in the second network;
obtaining, by the built-in DHCP client protocol stack in the modem module corresponding to the first network, the IP address from a home agent of the dual-mode communication terminal through a DHCP process; and
sending, by the modem module corresponding to the first network, the IP address to the DMCM module.

13. The system according to claim 10, wherein the second network is a WiMAX network and the first network is a 3G network, the software module running on the host further comprises a background management module of the dual-mode communication terminal, the background management module of the dual-mode communication terminal is configured with a dynamic host configuration protocol DHCP client protocol stack, and the obtaining the IP address which is of the dual-mode communication terminal and in the second network specifically is:
performing, by the DHCP client protocol stack configured in the background management module, a DHCP process via the second network and a home agent which is of the dual-mode communication terminal and in the second network; and
obtaining, by the DHCP client protocol stack configured in the background management module, the IP address through a DHCP Ack message which is from the home agent.

14. The system according to any one of claims 9 to 13, wherein the structure of the master-slave USB driver specifically is: installing a USB driver of the first mode in the dual-mode communication terminal on a platform of the second mode, wherein the USB interface function module installed on the host is a virtual network card of the second mode; and encapsulating a control command of the first mode in a format of a command of the second mode and delivering the encapsulated control command to a chip of the first mode for corresponding processing.
